# FASCICULE DE BREVET EUROPEEN

(11) **EP 2 001 162 B1**
(45) Date de publication et mention de la délivrance du brevet: **22.07.2015**
(21) Numéro de dépôt: 08102115.6
(22) Date de dépôt: 28.02.2008
(51) Int. Cl.: H04L 12/24, G06F 11/20

(54) **Dispositif et procédé de récupération de données d'état pour des équipements d'un réseau de communication**
Vorrichtung und Verfahren zur Wiedergewinnung von Zustandsdaten für die Geräte eines Kommunikationsnetzes
Device and method for recovering status data for equipment in a communication network

(30) Priorité: 04.06.2007 FR 0755438
(43) Date de publication de la demande: 10.12.2008
(73) Titulaire: ALCATEL LUCENT, 92100 Boulogne-Billancourt (FR)
(72) Inventeur: Lebel, Christophe, 44115 Haute Goulaine (FR); Froment, Thomas, 91310 Longpont sur Orge (FR)
(74) Mandataire: Sciaux, Edmond

(56) Documents cités:
- WO-A-94/30027
- MURAKAMI K ET AL: "Design, implementation, and evaluation of highly available distributed call processing systems", FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23 juin 1998 (1998-06-23), pages 118-127, XP010291284, ISBN: 0-8186-8470-4
- YUNLONG LIU ET AL: "A two-level strategy for software fault tolerance of service control point", COMPUTERS AND COMMUNICATIONS, 1998. ISCC '98. PROCEEDINGS. THIRD IEEE SYMPOSIUM ON ATHENS, GREECE 30 JUNE-2 JULY 1998, LOS ALAMITOS, CA, USA,IEEE COMPUT. SOC, US, 30 juin 1998 (1998-06-30), pages 616-621, XP010295157, ISBN: 0-8186-8538-7
- VAYSBURD A: "Fault tolerance in three-tier applications: focusing on the database tier", RELIABLE DISTRIBUTED SYSTEMS, 1999. PROCEEDINGS OF THE 18TH IEEE SYMPOSIUM ON LAUSANNE, SWITZERLAND 19-22 OCT. 1999, LOS ALAMITOS, CA, USA,IEEE COMPUT. SOC, US, 19 octobre 1999 (1999-10-19), pages 322-327, XP010357037, ISBN: 0-7695-0290-3

## Description

L'invention concerne les réseaux de communication, et plus précisément la restauration (ou le rétablissement) des états en cours d'applications qui sont utilisées (ou hébergées) par des équipements appartenant à de tels réseaux, en cas de problème survenu dans l'un de ces équipements.

On entend ici par « état d'une application » des données discriminantes d'un contexte d'appel impliquant un ensemble de participants, dites « statiques » dans le cadre de l'invention, ainsi qu'éventuellement des données dites dynamiques, comme par exemple l'état d'une ou plusieurs temporisations (ou « timers ») devant déclencher des tâches spécifiques, par exemple consécutivement à la réception d'un message ou bien pour envoyer périodiquement des requêtes par exemple pour maintenir ou rafraîchir un contexte de serveur de présence ou pour effectuer une synchronisation dans un système dit convergent.

Comme le sait l'homme de l'art, certains réseaux de communication, dits « tolérants aux erreurs » (ou « fault tolerant »), sont agencés pour récupérer les états en cours d'applications qui sont utilisées par un équipement objet d'un problème (ou « crash ») afin de les communiquer à un ou plusieurs autres équipements fonctionnant correctement pour qu'ils puissent utiliser ces applications à la place de celui qui est « tombé » (défaillant). C'est ce que l'on appelle la restauration (ou le rétablissement) d'application(s) ou plus précisément de contexte(s) d'appel. On comprendra que ces restaurations doivent se faire aussi vite que possible tout en minimisant l'impact sur la réactivité générale.

Pour permettre ces restaurations, un réseau de (télé)communication peut redonder ses ressources selon l'un ou l'autre des mécanismes de gestion suivants :
- une gestion de la redondance dite « N+N » dans laquelle un noeud actif est redondé par un noeud passif. En théorie, ce mécanisme supporte que N noeuds soient simultanément en panne,
- une gestion de la redondance dite « N+M » (avec M<N) dans laquelle tous les noeuds sont actifs, chacun redondant partiellement les autres mais l'ensemble redondant le système. Ce mécanisme supporte que M noeuds soient simultanément en panne.

L'invention est particulièrement bien adaptée, bien que non limitativement, au second mécanisme de gestion (N+M), qui par ailleurs permet l'exploitation des ressources d'un réseau de communication à un meilleur coût.

Par ailleurs, pour permettre les restaurations, les réseaux de communication précités comprennent généralement un ou plusieurs moyens de stockage dans lesquels sont stockées et mises à jour périodiquement les données d'état qui définissent les états en cours des applications qui sont utilisées par certains équipements de réseau (comme par exemple des serveurs). Lorsque le réseau détecte que l'un de ses équipements est tombé (défaillant), un mécanisme de répartition de charge (ou « load balancing ») choisit un ou plusieurs autres équipements afin qu'ils se chargent de la ou des applications qui étaient jusqu'alors à la charge de l'équipement tombé. Chaque équipement choisi va alors récupérer dans un moyen de stockage de données d'état les données d'état de chaque nouvelle application dont il a désormais la charge, afin de la restaurer (et plus précisément restaurer ces contextes d'appel).

La détection d'un problème se fait généralement par la mise en oeuvre d'un mécanisme (comme par exemple celui d'un démon de supervision de type « watchdog ») consistant à transmettre périodiquement des messages d'interrogation aux équipements de réseau concernés, et à considérer qu'un équipement fait l'objet d'un problème lorsqu'il ne répond pas à un message d'interrogation.

La récupération des données d'état peut se faire d'au moins deux façons.

Une première façon consiste, chaque fois que l'on détecte un problème dans un équipement de réseau (concerné), à charger un équipement choisi de récupérer séquentiellement dans un moyen de stockage de données d'état toutes les données d'état qui sont relatives à chaque application dont il a désormais la charge, puis à sélectionner parmi les données d'état récupérées celles qui doivent être effectivement restaurées du fait qu'elles ont été signalées par un message spécifique désignant leur(s) application(s). L'inconvénient de cette première façon réside dans le fait qu'elle induit des restaurations assez lentes en particulier lorsque des données d'état à restaurer sont dynamiques. En effet, il faut alors redémarrer certaines tâches d'arrière plan selon une fréquence prédéfinie, ce qui peut avoir un impact sur la réactivité générale, en particulier pendant les heures de pointe. Ceci est évident lorsque le système de secours est déjà actif, typiquement dans une architecture redondée de type N+M. Ceci peut être également vrai dans une architecture redondée de type N+N où le temps dit de basculement vers le système de secours peut se trouver retardé. Cette première façon s'avère donc difficilement compatible avec un fonctionnement en temps réel de certaines applications, en particulier lorsqu'elles mettent en oeuvre des traitements asynchrones et/ou pendant les heures de pointe.

Une seconde façon consiste à attendre que l'équipement, qui a été choisi pour se substituer à un équipement tombé, reçoive un message relatif à une application, qu'il sait considérer comme étant hors contexte, pour récupérer dans le moyen de stockage de données d'état concerné les données d'état qui sont relatives à cette application. C'est notamment ce qui est préconisé dans le chapitre 12.2.2 de la RFC 3261 de l'IETF (accessible à l'adresse « http ://www.ietf.org/rfc3261.txt »). Cette seconde façon est avantageuse pour les équipements car elle permet une récupération à la demande. Mais, du fait qu'elle dépend de l'arrivée des messages, elle n'est pas bien adaptée aux applications dont les états sont définis par des données d'état dynamiques dont l'exécution peut être contrainte temporellement.

Une autre solution est connue de l'art antérieur telle que décrite dans MURAKAMI K ET AL: "Design, Implementation, and Evaluation of Highly Available Distributed Call Processing Systems", FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA, IEEE COMPUT. SOC, US, pages 118-127, ISBN: 0-8186-8470-4.

Aucune solution connue n'apportant une entière satisfaction, l'invention a donc pour but d'améliorer la situation.

Elle propose à cet effet un procédé, dédié à la récupération de données d'état définissant les états en cours d'applications utilisées dans des équipements d'un réseau de communication, et consistant :
- à associer un identifiant unique, dit « identifiant d'application », à chacun des contextes d'appel traités par une même application (ou une même (entité) logique « applicative ») d'un équipement de réseau,
- à stocker dans au moins un moyen de stockage du réseau les données d'état des applications en correspondance de leurs identifiants d'application, et
- en cas de détection d'un problème survenu dans au moins un équipement, à récupérer séquentiellement dans le moyen de stockage concerné les données d'état relatives à chaque application utilisée par cet équipement et les identifiants d'application correspondants, et, en cas de réception d'un message relatif à une application utilisée par cet équipement, à déterminer l'identifiant d'application qu'il désigne puis les données d'état correspondantes parmi les données d'état récupérées et parmi les données d'état stockées dans le moyen de stockage concerné si elles n'ont pas encore été récupérées.

Le procédé selon l'invention peut comporter d'autres caractéristiques qui peuvent être prises séparément ou en combinaison, et notamment :
- on peut adjoindre un identifiant d'application à un message relatif à l'application correspondante ;
- en variante, on peut déterminer un identifiant d'application à partir d'informations qui sont contenues dans un message relatif à l'application correspondante ;
- on peut mettre à jour (éventuellement périodiquement) les données d'état qui sont stockées dans le moyen de stockage concerné ;
- on peut transmettre (éventuellement périodiquement) des messages d'interrogation aux équipements, et en l'absence de réponse d'un équipement on considère qu'il fait l'objet d'un problème détecté ;
- en présence d'au moins deux équipements de réseau et en cas de détection d'un problème au niveau d'un équipement, on peut avertir l'un au moins des autres équipements de réseau de l'existence d'un problème dans cet équipement, de sorte qu'il procède à la récupération des données d'application des applications qui sont utilisées par l'équipement tombé ;
- lorsque l'on reçoit un message désignant un identifiant d'application, mais que les données d'état correspondant à cet identifiant d'application n'ont pas encore été récupérées séquentiellement, on peut poursuivre la récupération séquentielle pour les autres identifiants d'application et récupérer en parallèle les données d'état recherchées (de l'identifiant d'application concerné) directement dans le moyen de stockage concerné ;
   ➢ on peut récupérer en parallèle les données d'état recherchées directement dans le moyen de stockage après avoir verrouillé les données d'état, de manière à prévenir (éviter) une restauration parallèle des données identifiées au moyen de l'identifiant d'application par la récupération séquentielle ;
   ➢ en variante, après avoir récupéré en parallèle les données d'état recherchées directement dans le moyen de stockage, on peut vérifier que l'on n'active pas le contexte restauré deux fois de suite ;
- les données d'état sont choisies parmi des données, dites statiques, discriminantes d'un contexte d'appel impliquant un ensemble de participants, et des données, dites dynamiques, variables dans le temps.

L'invention propose également un dispositif, dédié à la récupération de données d'état définissant les états en cours d'applications utilisées dans des équipements d'un réseau de communication, et comprenant des moyens de traitement chargés, en cas de détection d'un problème survenu dans au moins un équipement du réseau, de récupérer séquentiellement dans un moyen de stockage des données d'état relatives à chaque application utilisée par cet équipement et stockées en correspondance d'identifiants d'application associés à chaque contexte d'appel traité par chaque application, et, en cas de réception d'un message relatif à une application utilisée par cet équipement, de déterminer l'identifiant d'application qui est désigné par ce message puis les données d'état correspondantes parmi les données d'état récupérées et parmi les données d'état qui sont stockées dans le moyen de stockage concerné si elles n'ont pas encore été récupérées.

Le dispositif selon l'invention peut comporter d'autres caractéristiques qui peuvent être prises séparément ou en combinaison, et notamment :
- il peut comprendre des moyens de détection chargés de générer (éventuellement périodiquement) des messages d'interrogation destinés aux équipements, et en l'absence de réponse d'un équipement de signaler aux moyens de traitement que cet équipement est tombé ;
- en cas de réception d'un message désignant un identifiant d'application, si les données d'état correspondant à cet identifiant d'application n'ont pas encore été récupérées séquentiellement, les moyens de traitement peuvent être chargés de poursuivre la récupération séquentielle pour les autres identifiants d'application et de récupérer en parallèle les données d'état recherchées directement dans le moyen de stockage concerné ;
   ➢ les moyens de traitement peuvent être chargés de récupérer en parallèle les données d'état recherchées directement dans le moyen de stockage après avoir verrouillé les données d'état, afin de prévenir (éviter) une restauration parallèle des données identifiées au moyen de l'identifiant d'application par la récupération séquentielle ;
   ➢ en variante, les moyens de traitement peuvent être chargés de vérifier que l'on n'active pas le contexte restauré deux fois de suite, après avoir récupéré en parallèle les données d'état recherchées directement dans le moyen de stockage.

L'invention propose également un équipement de réseau (par exemple un serveur) équipé d'une partie au moins d'un dispositif de récupération de données d'état du type de celui présenté ci-avant.

L'invention est particulièrement bien adaptée, bien que de façon non exclusive, aux réseaux de communication utilisant un protocole de signalisation asynchrone, par exemple de type HTTP ou de type SIP (pour « Session Initiation Protocol » - défini par la RFC 3261 de l'IETF) ou l'une de ses extensions ou variantes.

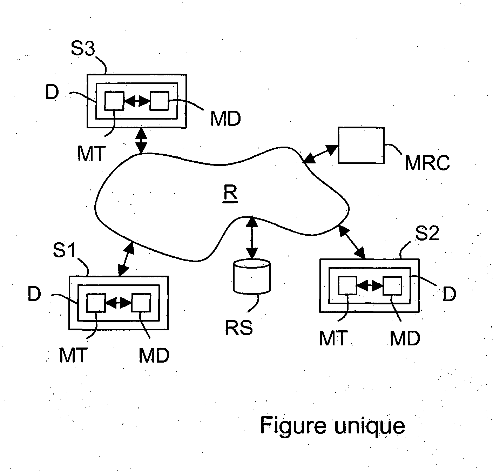

D'autres caractéristiques et avantages de l'invention apparaîtront à l'examen de la description détaillée ci-après, et du dessin annexé, sur lequel l'unique figure illustre de façon très schématique et fonctionnelle un réseau de communication comprenant des serveurs équipés d'un exemple de réalisation d'un dispositif de récupération de données d'état selon l'invention.

Le dessin annexé pourra non seulement servir à compléter l'invention, mais aussi contribuer à sa définition, le cas échéant.

L'invention a pour objet de permettre une récupération optimisée de données d'état définissant les états en cours d'applications utilisées par des équipements d'un réseau de communication tolérant aux erreurs, en vue du rétablissement (ou de la restauration) rapide de leurs contextes d'appel tout en minimisant l'impact sur la réactivité générale du réseau.

Dans ce qui suit, on considère à titre d'exemple non limitatif que les équipements de réseau font partie d'un (coeur de) réseau de communication de type IMS (« Internet Multimedia (core network) Subsystem »). Mais, l'invention n'est pas limitée à ce type de coeur de réseau de communication. Elle concerne en effet tout type de coeur de réseau de communication tolérant aux erreurs et permettant à des équipements de réseau d'utiliser des applications dont les états respectifs sont définis par des données d'état. Par conséquent, le réseau de communication pourra être un réseau fixe, comme par exemple un réseau xDSL, ou encore un domaine d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee).

Par ailleurs, on considère dans ce qui suit, à titre d'exemple non limitatif, que les équipements de réseau sont des serveurs utilisant un protocole de signalisation asynchrone de type SIP (ou l'une de ses extensions ou variantes). Mais, l'invention n'est limitée ni à ce type d'équipement de réseau ni à ce type de protocole de signalisation. Ainsi, les équipements de réseau peuvent être, également et notamment, des passerelles, des relais (par exemple de type « B2BUA » (« Back-to-Back User Agent »)) ou des serveurs de redirection ou intermédiaires (par exemple de type « proxy »).

Sur l'unique figure se trouve schématiquement illustré un coeur de réseau IMS R auquel sont connectés trois serveurs (ou noeuds) S1 à S3 (i=1 à 3) capables d'utiliser (ou mettre en oeuvre) des applications dont les états respectifs sont définis par des données d'état dites statiques, comme par exemple des identifiants d'appel, ainsi qu'éventuellement des données d'état dites dynamiques, comme par exemple les états de temporisations (ou « timers ») devant déclencher des tâches (ou traitements) spécifiques (éventuellement asynchrones), par exemple consécutivement à la réception d'un message ou bien pour envoyer périodiquement des requêtes, par exemple pour maintenir ou rafraîchir un contexte de serveur de présence ou pour effectuer une synchronisation dans un système dit convergent.

On notera que dans le cas d'un protocole de signalisation de type SIP, les états SIP des applications sont définis par un contexte pouvant impliquer un ensemble de dialogues et un jeu de temporisations.

Afin de rendre le réseau tolérant aux erreurs constituées par les problèmes (ou « crashes ») rencontrés par ses équipements Si, l'invention propose tout d'abord d'associer un identifiant unique, dit « identifiant d'application », à chacun des contextes d'appel qui sont traités par une même application (ou par une même (entité) logique « applicative ») d'un équipement de réseau Si, et de stocker dans au moins un moyen de stockage RS du réseau les données d'état en cours des applications en correspondance de leurs identifiants d'application respectifs.

En d'autres termes, à chaque contexte d'appel traité par une application est associé un identifiant d'application propre.

On notera que les données d'état des applications et les identifiants d'application correspondants, qui sont utilisés dans le réseau, peuvent être stockés dans un seul moyen de stockage RS (comme illustré de façon non limitative sur l'unique figure) ou bien dans plusieurs moyens de stockage RS (éventuellement séparés physiquement), de façon redondante ou de façon répartie. Par exemple, chaque équipement (ou noeud) Si peut comporter un moyen de stockage RS.

Chaque moyen de stockage RS se présente par exemple sous la forme d'un registre ou d'une base de données ou encore d'un système réparti, par exemple de type « pair à pair » (ou « peer-to-peer ») dont la clé de répartition peut servir à identifier un noeud de stockage.

On notera que l'on peut stocker dans au moins un équipement du réseau (éventuellement les équipements Si) une table de correspondance entre chaque identifiant d'application et un identifiant de communication de l'équipement Si qui a la charge de l'application correspondante ainsi qu'un identifiant de communication de l'équipement Si' qui a été choisi par le réseau pour se charger de cette application à la place de l'équipement Si au cas où il tomberait. Dans ce cas, chaque équipement Si doit comporter un moyen de stockage RS stockant les données d'état des applications dont il a la charge, et lorsqu'une application est désignée par son identifiant d'application on détermine dans la table de correspondance l'identifiant de communication qui lui correspond et qui est celui de l'équipement Si dans lequel sont stockées ses données d'état.

Toute méthode peut être envisagée pour alimenter le(s) moyen(s) de stockage RS. Ainsi, les équipements Si peuvent par exemple être chargés de communiquer à un (des ou leur) moyen(s) de stockage RS, éventuellement périodiquement, les données d'état des applications dont ils ont la charge, afin de mettre à jour (éventuellement périodiquement) son (leur) contenu. Dans une variante, le réseau pourrait comporter un équipement dédié, d'une part, à la collection (éventuellement périodique) auprès des équipements Si des données d'état des applications dont ils ont respectivement la charge, et d'autre part, à la mise à jour (éventuellement périodique) du contenu de chaque moyen de stockage RS compte tenu des données d'état collectées.

L'invention propose également, chaque fois que l'on détecte au sein du réseau qu'au moins un équipement Si' est tombé (c'est-à-dire fait l'objet d'un problème) et donc qu'il n'est plus en mesure de servir à au moins une application, de récupérer séquentiellement dans le moyen de stockage RS concerné les données d'état, qui sont relatives à chaque application dont cet équipement Si' avait jusqu'alors la charge, et les identifiants d'application correspondants, et, en cas de réception d'un message (ici SIP) relatif à une application dont cet équipement Si' avait jusqu'alors la charge, à déterminer l'identifiant d'application qui est désigné par ce message puis les données d'état correspondantes parmi les données d'état récupérées et parmi les données d'état qui sont stockées dans le moyen de stockage RS concerné si elles n'ont pas encore été récupérées.

On notera que l'on appelle ici « méthode proactive » la méthode de récupération séquentielle de toutes les données d'état de toutes les applications qui étaient prises en charge par un équipement tombé Si', tandis que l'on appelle ici « méthode réactive » la méthode de récupération directe des données d'état d'une application dont l'identifiant d'application est contenu dans un message SIP reçu et qui était prise en charge par un équipement tombé Si'.

On notera par ailleurs que le message qui est relatif à une application peut désigner l'identifiant d'application correspondant soit directement, soit indirectement. Plus précisément, on peut adjoindre un identifiant d'application à un message relatif à l'application correspondante, ou bien on peut déterminer un identifiant d'application à partir d'informations qui sont contenues dans un message relatif à l'application correspondante.

Dans le cas d'une adjonction d'identifiant d'application c'est de préférence l'équipement Si qui génère un message relatif à une application qui est chargé de lui adjoindre l'identifiant d'application associé. Mais, cette adjonction pourrait être également effectuée par un équipement dédié du réseau.

Un identifiant d'application peut par exemple être adjoint dans un entête spécifique d'un message SIP. A cet effet, on peut par exemple utiliser une méthode du type de celle qui est décrite dans le document brevet FR 0654035 (déposé le 2 octobre 2006).

Le message (ici SIP) relatif à une application est généralement transmis à l'équipement Si qui a été choisi par le réseau pour se charger de cette application à la place de l'équipement Si' (i'≠i) tombé. C'est en effet vers cet équipement Si choisi que doivent être désormais transmis les messages SIP relatifs à cette application et les trafics occasionnés par cette dernière. Mais, si ce n'est pas le cas, l'équipement récepteur procède à la récupération des données d'état en verrouillant à distance les ressources par exemple au moyen d'un gestionnaire de transactions partagées (ou « shared transaction manager »), puis, il communique à l'équipement Si choisi (ou active dans son propre moyen de stockage RS (dans le cas d'un système réparti dans lequel chaque noeud de réseau Si a la charge d'une réplication d'une partie des états du système global)) les données d'état récupérées de l'application dont il a nouvellement la charge afin qu'il les restaure.

Le choix d'un ou des équipements de remplacement est par exemple effectué par un module de répartition de charge (ou « load balancing ») MRC du réseau. On notera que lorsqu'un équipement Si' tombé (ou défaillant) a en charge plusieurs applications, le module MRC peut ordonner à un seul équipement Si de se charger de toutes ces applications, ou bien à plusieurs équipements Si de se charger respectivement d'une ou plusieurs applications. Cela dépend en effet, notamment, des trafics que peuvent encore supporter les autres équipements Si (non défaillants) à l'instant du choix et des trafics occasionnés par les applications à prendre en charge.

La récupération des données d'état, d'une application prise en charge par un équipement Si' tombé, peut se faire comme indiqué ci-dessous.

Lorsque l'on reçoit un message désignant (directement ou indirectement) un identifiant d'application, on commence par déterminer si les données d'état correspondant à cet identifiant d'application ont déjà été récupérées séquentiellement auprès du moyen de stockage RS concerné par la méthode proactive.

Dans l'affirmative, on transmet les données d'état à la logique de l'application dans le contexte ainsi restauré et identifié par l'identifiant d'application.

Dans la négative, on poursuit la récupération séquentielle des données d'état (par la méthode proactive) pour les autres identifiants d'application et on récupère en parallèle les données d'état recherchées directement dans le moyen de stockage RS concerné (par la méthode réactive) pour l'identifiant concerné.

Les deux méthodes proactive et réactive fonctionnant en parallèle elles peuvent toutes les deux permettre de déterminer en parallèle les mêmes données d'état et donc provoquer deux restaurations décalées dans le temps. Or, il faut garantir l'intégrité des traitements (temporisations ou traitement spécifique de l'application après une panne), c'est-à-dire qu'ils ne sont exécutés qu'une seule fois.

Pour ce faire, on peut procéder de deux façons.

Une première façon consiste à récupérer en parallèle les données d'état recherchées directement dans le moyen de stockage RS après avoir verrouillé les données d'état. On évite ainsi de restaurer en parallèle des données identifiées au moyen de l'identifiant d'application par la récupération séquentielle.

Une seconde façon consiste à vérifier que l'on n'active pas le contexte restauré deux fois de suite après avoir récupéré en parallèle les données d'état recherchées directement dans le moyen de stockage RS. En d'autres termes, on vérifie que les données d'état récupérées par l'une ou l'autre des deux méthodes n'ont pas encore été utilisées pour effectuer la restauration de contexte. Cette vérification peut se faire facilement étant donné que les deux méthodes utilisent le même identifiant d'application pour effectuer leur recherche de données d'état, et donc qu'elles peuvent s'exclure mutuellement, typiquement via un mécanisme de verrouillage qui dépendra de la granularité choisie pour le verrou.

Si la vérification indique que l'on peut effectuer la restauration, alors on effectue celle-ci, puis on signale qu'elle a été effectuée afin qu'elle ne soit pas de nouveau effectuée avec les mêmes données d'état récupérées par l'autre méthode.

On notera que la récupération des données d'état se fait au moyen d'un dispositif D. Ce dernier peut être implanté dans un équipement du réseau dédié à la récupération. Mais, et comme illustré sur l'unique figure, il est avantageux d'implanter un dispositif de récupération D dans chaque équipement Si susceptible de prendre en charge au moins une application à la place d'un autre équipement tombé Si'. La finalité de ce dispositif D est l'activation en mémoire d'un équipement tombé Si' du contexte équivalent opéré par un équipement Si.

Un dispositif de récupération D comprend au moins un module de traitement MT qui est chargé de procéder à une récupération de données d'état, selon les modalités présentées ci-avant, chaque fois qu'un problème de connexion a été détecté dans un équipement Si du réseau. Par conséquent, le module de traitement MT récupère séquentiellement dans un moyen de stockage RS les données d'état qui sont relatives à chaque application qui est utilisée par un équipement tombé Si' (méthode proactive), et consécutivement à la réception d'un message relatif à une application utilisée par l'équipement tombé Si, il détermine l'identifiant d'application qui est désigné par ce message puis les données d'état correspondantes parmi les données d'état récupérées (méthode proactive) et parmi les données d'état qui sont stockées dans le moyen de stockage RS concerné si elles n'ont pas encore été récupérées (méthode réactive).

Par ailleurs, le dispositif D peut être également chargé de la mise à jour, périodique ou suite à un événement déclenché par la logique de l'application, dans au moins un moyen de stockage RS soit des données d'état qui concernent plusieurs applications, lorsqu'il agit pour plusieurs équipements Si, soit des données d'état qui concernent les applications qui sont à la charge de son équipement Si, lorsqu'il est implanté dans ce dernier.

De plus, et comme illustré, le dispositif D peut éventuellement comprendre un module de détection MD chargé de générer (éventuellement périodiquement) des messages d'interrogation destinés aux équipements Si afin de déterminer s'ils peuvent être joints. Dans ce cas, lorsque le module de détection MD ne reçoit pas de réponse d'un équipement Si', il peut le signaler à son module de traitement MT afin qu'il initie la récupération des données d'état des applications prises en charge par l'équipement tombé Si' selon la méthode proactive.

Lorsque le dispositif D n'est pas implanté dans un équipement Si, on peut envisager qu'il assure la détection des équipements tombés Si' pour un ensemble d'équipements Si (voire même tous) et qu'il signale au module de traitement MT de l'un au moins de ces équipements Si qu'un autre équipement Si' est tombé afin qu'il initie la récupération des données d'état des applications prises en charge par cet équipement tombé Si' selon la méthode proactive.

Le dispositif de récupération de données d'état D selon l'invention, et notamment son module de traitement MT et son éventuel module de détection MD, peuvent être réalisés sous la forme de circuits électroniques, de modules logiciels (ou informatiques), ou d'une combinaison de circuits et de logiciels.

L'invention permet de restaurer de nombreuses applications (et plus précisément leurs contextes d'appel), notamment dans le domaine des télécommunications, tout en maintenant un niveau de réactivité sensiblement constant au sein du réseau. Par ailleurs, l'invention est particulièrement bien adaptée, bien que non limitativement, aux applications manipulant des contextes d'appels de durées relativement longues et qui requièrent des traitements asynchrones de message durant la vie de ces contextes.

L'invention ne se limite pas aux modes de réalisation de dispositif et de procédé de récupération de données d'état et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans lequel chaque équipement de réseau (pouvant se charger d'au moins une application) est équipé d'un dispositif de récupération de données d'état. Mais, l'invention peut être également mise en oeuvre au moyen d'un seul dispositif de récupération de données d'état agissant pour plusieurs équipements de réseau.

## Revendications

1. Procédé de récupération de données d'état définissant les états en cours d'applications utilisées dans des équipements (Si) d'un réseau de communication, **caractérisé en ce qu'**il consiste i) à associer un identifiant unique, dit « identifiant d'application », à chacun des contextes d'appel traités par une même application utilisée par des équipements (Si) dudit réseau, ii) à stocker dans au moins un moyen de stockage (RS) dudit réseau les données d'état des applications en correspondance de leurs identifiants d'application, et iii) en cas de détection d'un problème survenu dans au moins un équipement (Si'), à récupérer séquentiellement dans le moyen de stockage (RS) concerné les données d'état relatives à chaque application utilisée par cet équipement (Si') et les identifiants d'application correspondants, et, en cas de réception d'un message relatif à une application utilisée par cet équipement (Si'), à déterminer l'identifiant d'application qu'il désigne puis les données d'état correspondantes parmi lesdites données d'état récupérées et parmi lesdites données d'état stockées dans ledit moyen de stockage (RS) concerné si elles n'ont pas encore été récupérées.

2. Procédé selon la revendication 1, **caractérisé en ce que** l'on adjoint un identifiant d'application à un message relatif à l'application correspondante.

3. Procédé selon la revendication 1, **caractérisé en ce que** l'on détermine un identifiant d'application à partir d'informations contenues dans un message relatif à l'application correspondante.

4. Procédé selon l'une des revendications 1 à 3, **caractérisé en ce que** l'on met à jour les données d'état stockées dans ledit moyen de stockage (RS) concerné.

5. Procédé selon l'une des revendications 1 à 4, **caractérisé en ce que** l'on transmet des messages d'interrogation auxdits équipements (Si), et en l'absence de réponse d'un équipement (Si) on considère qu'il fait l'objet d'un problème détecté.

6. Procédé selon l'une des revendications 1 à 5, **caractérisé en ce qu'**en présence d'au moins deux équipements de réseau (Si) et en cas de détection d'un problème au niveau d'un équipement (Si') on avertit l'un au moins des autres équipements de réseau (Si, i≠i') de l'existence d'un problème dans cet équipement (Si'), de sorte qu'il procède à la récupération des données d'application des applications qui sont utilisées par l'équipement (Si') ayant un problème.

7. Procédé selon l'une des revendications 1 à 6, **caractérisé en ce qu'**en cas de réception d'un message désignant un identifiant d'application, si les données d'état correspondant à cet identifiant d'application n'ont pas encore été récupérées séquentiellement, on poursuit la récupération séquentielle pour les autres identifiants d'application et on récupère en parallèle les données d'état recherchées directement dans ledit moyen de stockage (RS).

8. Procédé selon la revendication 7, **caractérisé en ce que** l'on récupère en parallèle les données d'état recherchées directement dans ledit moyen de stockage (RS) après avoir verrouillé les données d'état, de manière à prévenir une restauration parallèle des données identifiées au moyen de l'identifiant d'application par la récupération séquentielle.

9. Procédé selon la revendication 7, **caractérisé en ce qu'**après avoir récupéré en parallèle les données d'état recherchées directement dans ledit moyen de stockage (RS), on vérifie que l'on n'active pas le contexte restauré deux fois de suite.

10. Procédé selon l'une des revendications 1 à 9, **caractérisé en ce que** lesdites données d'état sont choisies dans un groupe comprenant des données, dites statiques, discriminantes d'un contexte d'appel impliquant un ensemble de participants, et des données, dites dynamiques, variables dans le temps.

11. Dispositif de récupération de données d'état définissant les états en cours d'applications utilisées dans des équipements (Si) d'un réseau de communication, **caractérisé en ce qu'**il comprend des moyens de traitement (MT) agencés, en cas de détection d'un problème survenu dans au moins un équipement (Si') dudit réseau, pour récupérer séquentiellement dans un moyen de stockage (RS) des données d'état relatives à chaque application utilisée par cet équipement (Si') et stockées en correspondance d'identifiants d'application associés à chaque contexte d'appel traité par chaque application, et, en cas de réception d'un message relatif à une application utilisée par cet équipement (Si'), pour déterminer l'identifiant d'application désigné par ce message puis les données d'état correspondantes parmi lesdites données d'état récupérées et parmi les données d'état stockées dans ledit moyen de stockage (RS) si elles n'ont pas encore été récupérées.

12. Dispositif selon la revendication 11, **caractérisé en ce qu'**il comprend des moyens de détection (MD) agencés pour générer des messages d'interrogation destinés auxdits équipements (Si), et en l'absence de réponse d'un équipement (Si') pour signaler auxdits moyens de traitement (MT) que cet équipement (Si') fait l'objet d'un problème.

13. Dispositif selon l'une des revendications 11 et 12, **caractérisé en ce qu'**en cas de réception d'un message désignant un identifiant d'application, si les données d'état correspondant à cet identifiant d'application n'ont pas encore été récupérées séquentiellement, lesdits moyens de traitement (MT) sont agencés pour poursuivre la récupération séquentielle pour les autres identifiants d'application et pour récupérer en parallèle les données d'état recherchées directement dans ledit moyen de stockage (RS).

14. Dispositif selon la revendication 13, **caractérisé en ce que** lesdites moyens de traitement (MT) sont agencés pour récupérer en parallèle les données d'état recherchées directement dans ledit moyen de stockage (RS) après avoir verrouillé les données d'état, de manière à prévenir une restauration parallèle des données identifiées au moyen de l'identifiant d'application par la récupération séquentielle.

15. Dispositif selon la revendication 13, **caractérisé en ce que** lésdits moyens de traitement (MT) sont agencés pour vérifier que l'on n'active pas le contexte restauré deux fois de suite, après avoir récupéré en parallèle les données d'état recherchées directement dans ledit moyen de stockage (RS).

16. Réseau comportant au moins un équipement (Si) et un dispositif de récupération de données d'état (D) selon l'une des revendications 11 à 15, extérieur audit au moins un équipement.

17. Réseau comportant au moins un équipement (Si) contenant un dispositif de récupération de données d'état (D) selon l'une des revendication 11 à 15.

## Patentansprüche

1. Verfahren zum Zurückgewinnen von Zustandsdaten, die die laufenden Zustände von Anwendungen definieren, die in Geräten (Si) eines Kommunikationsnetzwerks verwendet werden, **dadurch gekennzeichnet, dass** das Verfahren in i) dem Assoziieren einer "Anwendungskennung" genannten eindeutigen Kennung mit jedem der Anrufkontexte, die von derselben Anwendung verarbeitet werden, die von Geräten (Si) des besagten Netzwerks verwendet wird, ii) dem Speichern der Zustandsdaten von Anwendungen entsprechend ihren Anwendungskennungen in mindestens einem Speichermittel (RS) des besagten Netzwerks und iii) im Fall des Erkennens eines Problems, das in mindestens einem Gerät (Si') aufgetreten ist, dem sequentiellen Zurückgewinnen der Zustandsdaten in Bezug auf jede Anwendung, die von diesem Gerät (Si') verwendet wird, und der entsprechenden Anwendungskennungen aus dem betreffenden Speichermittel (RS), und im Fall des Empfangens einer Nachricht bezüglich einer Anwendung, die von diesem Gerät (Si') verwendet wird, dem Bestimmen der bezeichneten Anwendungskennung und dann der entsprechenden Zustandsdaten aus den besagten zurückgewonnenen Zustandsdaten und aus den besagten Zustandsdaten, die in dem besagten betreffenden Speichermittel (RS) gespeichert sind, sofern diese noch nicht zurückgewonnen wurden, besteht.

2. Verfahren nach Anspruch 1, **dadurch gekennzeichnet, dass** eine Anwendungskennung einer Nachricht bezüglich der entsprechenden Anwendung hinzugefügt wird.

3. Verfahren nach Anspruch 1, **dadurch gekennzeichnet, dass** eine Anwendungskennung aus Informationen bestimmt wird, die in einer Nachricht bezüglich der entsprechenden Anwendung enthalten sind.

4. Verfahren nach einem der Ansprüche 1 bis 3, **dadurch gekennzeichnet, dass** die Zustandsdaten, die in dem besagten betreffenden Speichermittel (RS) gespeichert sind, aktualisiert werden.

5. Verfahren nach einem der Ansprüche 1 bis 4, **dadurch gekennzeichnet, dass** Nachrichten zum Abfragen an die besagten Geräte (Si) übertragen werden und bei Fehlen einer Antwort von einem Gerät (Si) erwogen wird, dass es mit einem erkannten Problem zusammenhängt.

6. Verfahren nach einem der Ansprüche 1 bis 5, **dadurch gekennzeichnet, dass** bei Vorliegen von mindestens zwei Netzwerkgeräten (Si) und im Fall des Erkennens eines Problems hinsichtlich eines Geräts (Si') mindestens eines der anderen Netzwerkgeräte (Si, i ≠ i') von dem Vorhandensein eines Problems in diesem Gerät (Si') benachrichtigt wird, sodass das Zurückgewinnen von Anwendungsdaten von Anwendungen, die von dem Gerät (Si') mit einem Problem verwendet werden, vorgenommen wird.

7. Verfahren nach einem der Ansprüche 1 bis 6, **dadurch gekennzeichnet, dass** im Fall des Empfangens einer Nachricht, die eine Anwendungskennung bezeichnet, wenn die Zustandsdaten, die dieser Anwendungskennung entsprechen, noch nicht sequentiell zurückgewonnen wurden, das sequentielle Zurückgewinnen für die anderen Anwendungskennungen fortgesetzt wird und parallel die Zustandsdaten, die direkt in dem besagten Speichermittel (RS) gesucht wurden, zurückgewonnen werden.

8. Verfahren nach Anspruch 7, **dadurch gekennzeichnet, dass** parallel die Zustandsdaten, die direkt in dem besagten Speichermittel (RS) gesucht wurden, zurückgewonnen werden, nachdem die Zustandsdaten gesperrt wurden, um eine parallele Wiederherstellung der Daten, die mittels der Anwendungskennung identifiziert werden, durch das sequentielle Zurückgewinnen zu verhindern.

9. Verfahren nach Anspruch 7, **dadurch gekennzeichnet, dass**, nachdem die Zustandsdaten, die direkt in dem besagten Speichermittel (RS) gesucht wurden, parallel zurückgewonnen wurden, überprüft wird, dass der wiederhergestellte Kontext nicht zweimal nacheinander aktiviert wird.

10. Verfahren nach einem der Ansprüche 1 bis 9, **dadurch gekennzeichnet, dass** die besagten Zustandsdaten aus einer Gruppe ausgewählt werden, die statisch genannte Daten umfasst, die einen Anrufkontext, der eine Menge von Teilnehmern beinhaltet, unterscheiden, und dynamisch genannte Daten, die im Zeitablauf variabel sind.

11. Vorrichtung zum Zurückgewinnen von Zustandsdaten, die die laufenden Zustände von Anwendungen definieren, die in Geräten (Si) eines Kommunikationsnetzwerks verwendet werden, **dadurch gekennzeichnet, dass** die Vorrichtung Verarbeitungsmittel (MT) umfasst, die im Fall des Erkennens eines Problems, das in mindestens einem Gerät (Si') des besagten Netzwerks aufgetreten ist, eingerichtet ist, um Zustandsdaten in Bezug auf jede Anwendung, die von diesem Gerät (Si') verwendet wird, und die entsprechend Anwendungskennungen, die mit jedem Anrufkontext, der von jeder Anwendung verarbeitet wird, assoziiert sind, gespeichert sind, sequentiell in einem Speichermittel (RS) zurückzugewinnen und im Fall des Empfangens einer Nachricht bezüglich einer Anwendung, die von diesem Gerät (Si') verwendet wird, die Anwendungskennung, die von dieser Nachricht bezeichnet wurde, und dann die entsprechenden Zustandsdaten aus den besagten zurückgewonnenen Zustandsdaten und aus den Zustandsdaten, die in dem besagten Speichermittel (RS) gespeichert sind, sofern diese noch nicht zurückgewonnen wurden, zu bestimmen.

12. Vorrichtung nach Anspruch 11, **dadurch gekennzeichnet, dass** sie Erkennungsmittel (MD) umfasst, die eingerichtet sind, um Abfragenachrichten zu erzeugen, die an die besagten Geräte (Si) gerichtet sind, und um bei Fehlen einer Antwort von einem Gerät (Si') den besagten Verarbeitungsmitteln (MT) zu signalisieren, dass dieses Gerät (Si') mit einem Problem zusammenhängt.

13. Vorrichtung nach einem der Ansprüche 11 und 12, **dadurch gekennzeichnet, dass** im Fall des Empfangens einer Nachricht, die eine Anwendungskennung bezeichnet, wenn die Zustandsdaten, die dieser Anwendungskennung entsprechen, noch nicht sequentiell zurückgewonnen wurden, die besagten Verarbeitungsmittel (MT) eingerichtet sind, um das sequentielle Zurückgewinnen für die anderen Anwendungskennungen fortzusetzen und parallel die Zustandsdaten, die direkt in dem besagten Speichermittel (RS) gesucht wurden, zurückzugewinnen.

14. Vorrichtung nach Anspruch 13, **dadurch gekennzeichnet, dass** die besagten Verarbeitungsmittel (MT) eingerichtet sind, um parallel die Zustandsdaten, die direkt in dem besagten Speichermittel (RS) gesucht wurden, zurückzugewinnen, nachdem die Zustandsdaten gesperrt wurden, um eine parallele Wiederherstellung von Daten, die mittels der Anwendungskennung identifiziert werden, durch das sequentielle Zurückgewinnen zu verhindern.

15. Vorrichtung nach Anspruch 13, **dadurch gekennzeichnet, dass** die besagten Verarbeitungsmittel (MT) eingerichtet sind, um zu überprüfen, dass der wiederhergestellte Kontext nicht zweimal nacheinander aktiviert wird, nachdem die Zustandsdaten, die direkt in dem besagten Speichermittel (RS) gesucht wurden, parallel zurückgewonnen wurden.

16. Netzwerk, umfassend mindestens ein Gerät (Si) und eine Vorrichtung zum Zurückgewinnen von Zustandsdaten (D) nach einem der Ansprüche 11 bis 15, die extern zu dem mindestens einen Gerät ist.

17. Netzwerk, umfassend mindestens ein Gerät (Si), enthaltend eine Vorrichtung zum Zurückgewinnen von Zustandsdaten (D) nach einem der Ansprüche 11 bis 15.

## Claims

1. A method for retrieving state data defining the current states of applications used in devices (Si) of a communication network, **characterized in that** it consists i) of associating a unique identifier, called the "application identifier", with each of the call contexts processed by a single application used by equipment (Si) of said network, ii) of storing in at least one storage means (RS) of said network the state data of applications as a match for their application identifiers, and iii) in the event that a problem is detected as occurring in at least one device (Si'), of sequentially retrieving from the storage means (RS) in question the state data related to each application used by that device (Si') and the corresponding application identifiers, and in the event that a message is received related to an application used by that device (Si'), of determining the application identifier that it designates, then the corresponding state data from among said retrieved state data and from among said state data stored in said storage means (RS) in question if not yet retrieved.

2. A method according to claim 1, **characterized in that** an application identifier is added to a message related to the corresponding application.

3. A method according to claim 1, **characterized in that** an application identifier is determined based on information contained in a message related to the corresponding application.

4. A method according to one of the claims 1 to 3, **characterized in that** the state data stored in said storage means (RS) in question are updated.

5. A method according to one of the claims 1 to 4, **characterized in that** query messages are transmitted to said devices (Si), and in the absence of any response from a device (Si), it is assumed that is experiencing a detected problem.

6. A method according to one of the claims 1 to 5, **characterized in that** in the presence of at least two network devices (Si) and if a problem is detected in a device (Si'), at least one of the other network devices (Si, i#i') is notified of the existence of a problem in that device (Si'), so that it proceeds to retrieve the application data from the applications that are being used by the device (Si') that has a problem.

7. A method according to one of the claims 1 to 6, **characterized in that** in the event a message is received designating an application identifier, if the state data corresponding to that application identifier have not yet been sequentially retrieved, sequential retrieval is carried out for the other application identifiers, and the state data searched for directly in said storage means (RS) are retrieved at the same time.

8. A method according to claim 7, **characterized in that** the state data searched for directly in said storage means (RS) are retrieved at the same time after locking the state data, so as to prevent a partial restoration of the data identified by means of the application identifier by sequential retrieval.

9. A method according to claim 7, **characterized in that** after the state data searched for directly in said storage means (RS) are retrieved at the same time, it is verified that the restored context is not activated twice in a row.

10. A method according to one of the claims 1 to 9, **characterized in that** said state data is chosen from a group comprising data, called static data, indicative of a call context involving a set of participants, and data, called dynamic data, that varies over time.

11. An apparatus for retrieving state data defining current states of applications used in devices (Si) of a communication network, **characterized in that** it comprises means of processing (MT) arranged, in the event a problem is detected as occurring in at least one device (Si') of said network, to sequentially retrieve from a storage means (RS) state data related to each application used by that device (Si') and stored as a match for application identifiers associated with each call context processed by each application, and in the event that a message is received related to an application used by that device (Si'), to determine the application identifier designated by that message, then the corresponding state data from among said retrieved state data and from among the state data stored in said storage means (RS) if not yet retrieved.

12. An apparatus according to claim 11, **characterized in that** it comprises detection means (MD) arranged to generate query messages intended for said devices (Si), and in the absence of a reply from a device (Si') to report to said processing means (MT) that that device (Si') is experiencing a problem.

13. An apparatus according to one of the claims 11 and 12, **characterized in that** if a message is received designating an application identifier, if the state data corresponding to that application identifier has not yet been sequentially retrieved, said processing means (MT) are arranged to carry out sequential retrieval for the other application identifiers and to retrieve the state data searched for directly in said storage means (RS) at the same time.

14. An apparatus according to claim 13, **characterized in that** said processing means (MT) are arranged to retrieve the state data searched for directly in said storage means (RS) at the same time after locking the state data, so as to prevent a partial restoration of the data identified by means of the application identifier by sequential retrieval.

15. An apparatus according to claim 13, **characterized in that** said processing means (MT) are arranged to verify that the restored context is not activated twice in a row, after retrieving the state data searched for directly in said storage means (RS) at the same time.

16. A network comprising at least one device (Si) and one apparatus for retrieving state data (D) according to one of the claims 11 to 15, external to said at least one device.

17. A network comprising at least one device (Si) containing an apparatus for retrieving state data (D) according to one of the claims 11 to 15.
